# FASCICULE DE BREVET EUROPEEN

(11) **EP 0 504 036 B1**
(45) Date de publication et mention de la délivrance du brevet: **02.08.1995**
(21) Numéro de dépôt: 92400615.8
(22) Date de dépôt: 10.03.1992
(51) Int. Cl.: B65G 39/14, B65G 39/16, B65G 39/04

(54) **Dispositif de centrage automatique sur convoyeur à bande supportée par des rouleaux souples par pincement variant avec la charge transportée**
Selbstzentrierende Vorrichtung für mittels flexibler Rollen unterstützte Förderbänder durch variable Quetschung in Abhängigkeit der Förderlast
Self-centring device for a conveyor belt supported on flexible rollers by variable clamping in accordance with the load conveyed

(30) Priorité: 13.03.1991 FR 9103154
(43) Date de publication de la demande: 16.09.1992
(73) Titulaire: Valcalda, Florent, F-95490 VAUREAL (FR)
(72) Inventeur: Valcalda, Florent, F-95490 VAUREAL (FR)

(56) Documents cités:
- FR-A- 1 317 836
- FR-A- 2 593 477
- FR-A- 2 604 700
- US-A- 4 144 964

## Description

L'invention est du domaine du transport continu de matériaux par convoyeurs à bande, plus particulièrement des convoyeurs performants à bande creusée en auge et supportée par des rouleaux souples flexibles.

Le transport de matériaux en vrac, bien souvent "tout venant" de dimensions très variées, pour l'exploitation de carrières par exemple, est pratiqué en continu sur des bandes transporteuses de longueurs pouvant aller de quelques mètres à plusieurs kilomètres d'un seul tenant. La courroie continue, dont la carcasse de renforcement est textile ou métallique, est supportée, à intervalles différenciés en fonction de la charge et de la tension au point considéré, par des rouleaux tournants de faible diamètre montés sur roulements.

A titre d'exemple de cette technologie, peut être cité le document US 2 271 166 de WEISS, portant sur un garnissage aisément remplaçable, sans démontage coûteux, de galets distincts formant la surface de contact de chacun des rouleaux rigides qui les portent au moyen de plusieurs jantes démontables.

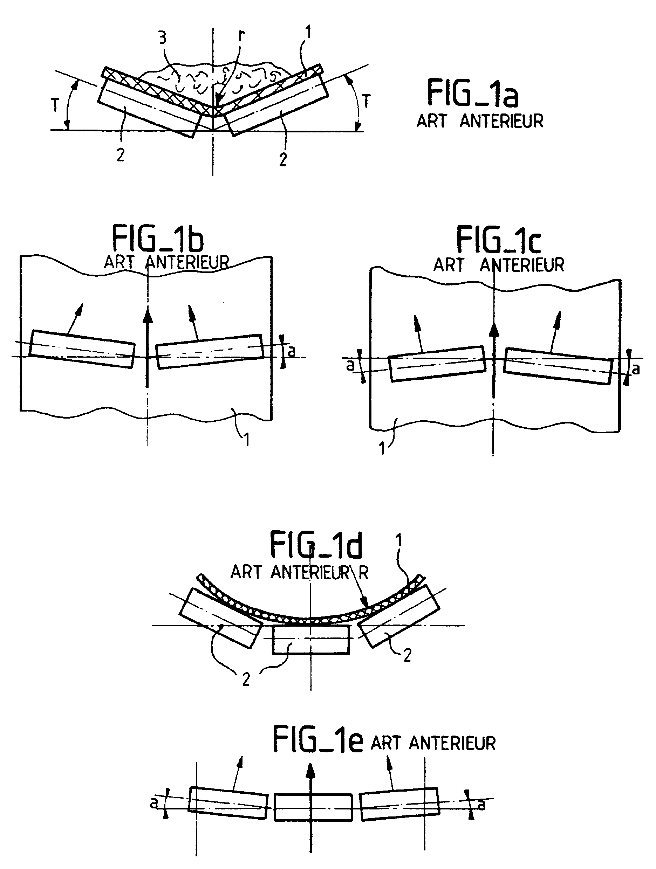

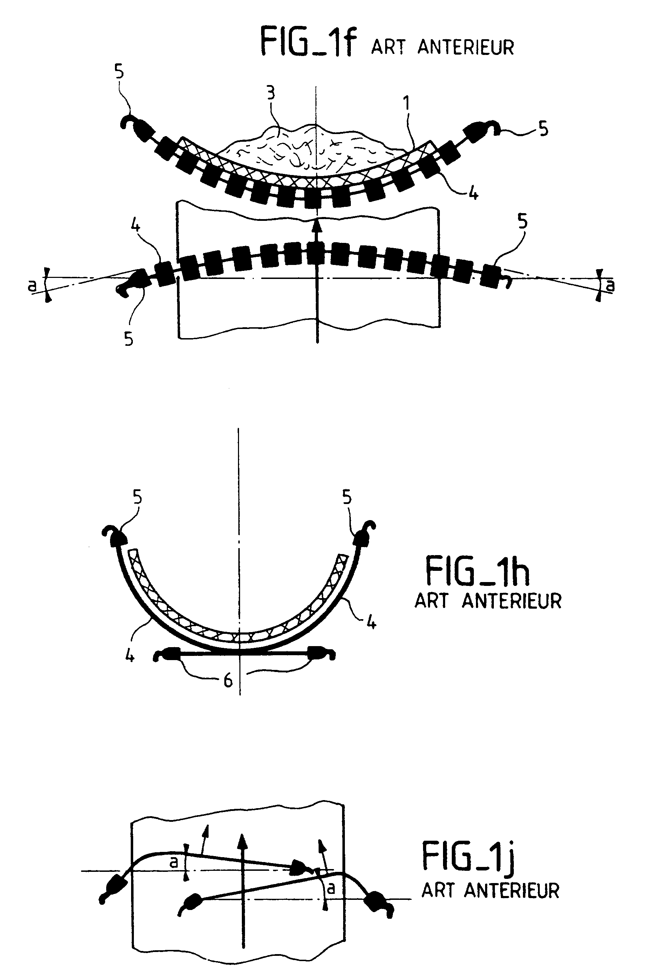

Un accroissement du débit de matière transportée est vite apparu possible par la "mise en auge" de la bande. La figure 1 du présent document illustrant l'art antérieur montre la première démarche consistant à séparer deux cylindres rigides montés fous sur leur axe, avec un angle notable par rapport à l'horizontale disposés symétriquement par rapport à l'axe de la bande. Pour clarifier l'exposé, le terme de "rouleau" sera utilisé pour ces cylindres porteurs élémentaires, et le terme de "support rigide" pour l'ensemble de deux ou trois rouleaux, contenus sensiblement dans un même plan vertical, orthogonal à la direction longitudinale de la bande, et les pièces de fixation supportant leurs roulements.

Deux rouleaux disposés en V dans un plan vertical provoquent une courbure de faible rayon dans l'axe de la bande, là ou s'accumule la charge, ce qui fatigue localement la carcasse de renfort, notamment dans les zones de changement de la pente longitudinale. Aussi est apparu la nécessité de l'usage d'un troisième rouleau horizontal supportant le centre de la charge, formant ainsi une auge de forme trapézoïdale, en reportant la courbure, plus réduite, dans deux zones intermédiaires de la bande. Une description de cet ensemble formant support rigide est donnée dans le document GB 1 000 094 de WOODHEAD, montrant que le rouleau central, légèrement décalé, peut être ainsi plus large que la lacune disposée entre les rouleaux obliques.

Ledit document fait également apparaître l'usage de rouleaux souples sous forme de ressorts hélicoïdaux reliant deux paliers à roulement, ceci autorisant une courbure plus progressive qui permet à la bande utilisée d'atteindre des largeurs de 1,80 mètres.

D'aussi larges convoyeurs ont tendance à perdre l'alignement entre la bande souple et l'axe du convoyeur ou de sa charpente portant les supports rigides ou les supports souples. Le document GB 797 422 de SUTCLIFFE fait apparaître un dispositif équilibreur égalisant la tension de rouleaux souples, constitués d'un mandrin flexible fixé à deux paliers, avec un artifice, déclaré nécessaire, consistant à relier en rotation les rouleaux souples par des joints universels, soit entre deux rouleaux en V, soit avec interposition d'un rouleau horizontal au centre du transporteur en auge large. Cet artifice ne semble pas généralisé par d'autres constructeurs.

Lorsque les rouleaux d'un support demeurent rigides, il est apparu qu'un centrage stable est obtenu par un léger angle de pincement par rapport au plan vertical orthogonal à la bande, donnant à l'axe des rouleaux, en auge à 30 degrés par exemple par rapport à l'horizontale, une composante de 1,5 à 3 degrés par rapport à ce plan comme exposé dans la figure 1.
Déterminé expérimentalement, cet angle entre plans verticaux contenant les rouleaux, appelé pincement, induit une force vers l'axe, plus grande du côté le plus chargé, tendant à satisfaire une trajectoire en équilibre stable lorsque ces composantes s'équilibrent. Un pincement positif exagéré comprime la bande en largeur, avec tendance à réduire le rayon de courbure de la mise en auge et, surtout, à accroître la résistance à l'avancement de la bande chargée en nécessitant une force motrice exagérée.

Le document FR 2 267 961 de VALCALDA, demandeur de la présente invention, conjugue l'intérêt de rouleaux souples avec l'artifice, destiné à remédier à leur inconvénient de présenter un pincement négatif sous l'effet de la résistance au roulement, car ils sont entraînés, dans un plan oblique, par le mouvement de la charge, ce qui engendre une instabilité sous charge élevée, susceptible de limiter les possibilités de charge.
Comme décrit dans la figure 1, des rouleaux souples, uniques par support, permettant une suspension caténaire économique de chacun de leurs paliers extérieurs, sont entraînés dans le sens de marche et provoquent un pincement négatif qui engendre l'instabilité de la bande transporteuse. Pour permettre à la fois des vitesses élevées et une mise en auge plus profonde, ce qui constitue les deux composantes d'un débit de matière important, le dernier document cité propose l'usage de deux rouleaux souples par support de convoyeur, imbriqués de façon que les pincements dissymétriques de chacun d'eux s'équilibrent en un rappel élastique.stable pour la bande chargée.
Pour ce faire, les points fixes intérieurs des deux rouleaux souples, nécessairement imbriqués (ou bien complétés d'un troisième rouleau souple, horizontal, sous la partie centrale de la charge), sont situés nettement plus bas que les points de fixation extérieurs. Ledit document décrit la possibilité, puisque chaque rouleau souple n'est plus lui-même symétrique par rapport à l'axe de la bande, de décaler légèrement ses propres points fixes dans le sens de la marche, de façon à provoquer, avant même l'apparition de la résistance au roulement, un pincement positif, source de stabilité pour la bande comme lorsque les rouleaux sont rigides.
La limite de l'intérêt de ce remède est que la stabilité intéressante, assurée à vide par ce moyen, s'accroît encore sous l'effet de la charge qui courbe lesdits rouleaux souples et que l'effet de pincement ainsi accru s'accompagne d'une résistance au roulement rédhibitoire. Un compromis expérimental est donc à trouver, entre une autostabilité nécessaire surtout à une bande à vide, par exemple très tendue au démarrage ou lorsque commence la mise en charge, et une stabilité exagérée quand la bande est chargée et provoque la courbure des rouleaux souples. La trajectoire en chaque point de ceux-ci n'a donc plus rigoureusement la même direction, induisant alors des frictions parasites.

Un perfectionnement aux transporteurs à rouleaux supportés, de façon caténaire, par des câbles latéraux est proposé oar le document FR 1 317 836 de DISTINGTON ENGINEERING. Pour remédier à l'instabilité de la bande, due à l'entraînement dans le sens du transport, il est prévu des tirants, soit rigides mais non réglables, soit souples et connectés par des câbles. Ce dispositif crée un pincement, mais ce pincement, qui n'est pas réglable, ne peut être adapté aux variations de charge.

L'art antérieur ainsi décrit conduit donc à une contradiction entre les possibilités d'accroître la largeur et la profondeur d'auge pour améliorer le débit d'un convoyeur et l'énergie minimale nécessaire pour assurer le roulement qu'exigent des vitesses satisfaisantes.
Les stabilités à vide et en charge conduisent, en effet, à accroître la consommation d'énergie ainsi que l'usure, afin de préserver la sécurité dans les phases à vide.

L'objet de l'invention est de proposer un nouveau remède n'obligeant pas à un choix de compromis, mais basé sur un dispositif relativement simple qui assure le pincement optimum, différent, aussi bien à vide qu'en charge, et un accroissement des performances si bien adapté que le dispositif puisse encore être expérimentalement ajustable, dans les zones les plus critiques, par un moyen simple à mettre en oeuvre.

L'invention est donc un dispositif de centrage automatique de la bande, sur un conveyeur à bande transporteuse souple, supportée par deux rangées de rouleaux flexibles comportant une fixation centrale unique et assurant un angle de pincement positif ou nul qui rappelle la bande mise en forme d'auge vers un équilibre dynamique stable sur l'axe du transporteur (voir US-A-4 144 964).

L'invention est caractérisé en ce que ladite fixation centrale unique, située plus bas que les points de fixation extérieure et commune à chaque couple desdits rouleaux flexibles, est mobile et se voit imposer, lorsque son altitude varie avec la charge, une trajectoire courbe, s'étendant en direction de la trajectoire longitudinale de la bande, par la rotation autour d'un axe fixe du levier basculant qui porte ladite fixation centrale unique et mobile, de façon à réduire l'angle de pincement quands'accroît la charge transportée,
et en ce que la trajectoire de ladite fixation centrale, tournant autour de l'axe fixe est réglée de façon que ledit pincement s'annule pour la valeur maximale de la charge transportée.

Par rouleaux flexibles doivent être entendues toutes formes de rouleaux en guirlande, que cette dernière soit constituée de câbles, d'articulations mécaniques ou d'articulations flexibles et élastiques faisant intervenir la liaison physico-chimique entre caoutchouc et métal.

Une variante permet également d'ajuster la position dudit point fixe un certain nombre de supports souples, dans une zone constituant un point singulier pour le convoyeur.

L'invention sera mieux comprise à la lecture de la description accompagnant les dessins dans lesquels :
- la figure 1 regroupe différents schémas de supports rigides et de supports souples selon l'art antérieur ;
- la figure 2 est un schéma du dispositif conforme à l'invention et une vue de sa réalisation matérielle ;
- la figure 3 est une coupe montrant le détail de la fixation centrale ;
- la figure 4 regroupe les schémas explicatifs du fonctionnement en présence et en absence de charge ;
- la figure 5 montre le dispositif d'ajustement du point fixe pour la fixation centrale.

La figure 1 regroupe les schémas de supports de convoyeur à bande selon l'art antérieur.

En vues 1a, 1b, 1c sont rappelés les angles appliqués à deux rouleaux rigides disposés en V, vus en coupe orthogonalement à la bande en vue 1a, schématisés en plan aux vues 1b et 1c.
La bande transporteuse (1) est supportée par deux rouleaux rigides (2) formant symétriquement, un angle d'auge (T), par rapport à l'horizontale, par exemple de 30 degrés, ce qui accroît la capacité de transport, imposant, de ce fait, une accumulation de la charge transportée (3) vers le centre de la bande où se forme un rayon de courbure (r), plus réduit alors sous l'effet de la charge que ne l'impose la raideur à vide de la bande.
En particulier, à vide, la bande, incurvée suivant un rayon constant a peu de motif de rappel vers l'équilibre, du fait qu'elle est supportée tangentiellement par les rouleaux rigides (2), obliques.
Pour améliorer la stabilité, une composante de rappel est assurée par un léger angle (a) représenté dans les vues de dessus.

La vue 1b indique un effet stabilisant si le pincement est dit positif dans le sens de marche du convoyeur, la vue 1c montre l'effet instable d'un pincement négatif.
La charge, pesant par l'intermédiaire de la bande sur les rouleaux porteurs, accroît nettement cet effet stabilisant qui doit être limité à des valeurs angulaires pour (a) de 1,5 à 3 degrés, pour éviter dans ces circonstances une consommation d'énergie et une usure des éléments en contact, due au glissement sous l'effet de la différence de trajectoire entre la bande transporteuse (1), mobile dans le sens de la flèche, et ses éléments porteurs que sont les rouleaux rigides (2).

La vue 1d montre, en coupe orthogonale à la bande, et la vue 1e montre, en plan, la solution améliorée à trois rouleaux rigides (2), la plus généralisée pour accroître la section supportant la charge transportée, par une mise en auge élargie de forme trapézoïdale. La vue le indique l'effet stabilisant apporté par le pincement positif du léger angle (a), même si la composante centripète exercée sur la bande transporteuse (1) a tendance à réduire les rayons de courbure sous l'effet de la charge, entre les rouleaux rigides (2). La vue 1d représentant l'installation à vide, la bande transporteuse (1) y présente une auge incurvée à rayon (R) presque constant, sous l'effet de sa rigidité propre, à peine tangente aux rouleaux obliques.

La vue 1f est une coupe orthogonale d'une bande transporteuse (1) de l'art antérieur, supportée par un rouleau flexible (4), suspendu simplement par deux points de fixation extérieurs (5) à la charpente du transporteur.
Les rouleaux flexibles (4) sont constitués soit d'un tube de caoutchouc renforcé, selon le document GB 797 422, soit d'un ressort métallique enroulé en hélice, comme le décrit le document GB 1000 094, soit encore de galets caoutchoutés surmoulés sur une âme en câble métallique selon le document FR 2 267 961.

La plus minime résistance au roulement, bien sûr accrue par la charge transportée (3), provoque un entraînement du rouleau flexible (4) dans le sens de la marche, ce qui, présenté dans la vue de dessus 1g, provoque un pincement négatif d'angle (a) équivalent à celui de rouleaux rigides présenté par le schéma de la figure 1c. L'instabilité engendrée est accrue par la charge et limite les possibilités d'accroissement de la charge transportée que permettait d'espérer la mise en auge progressive autorisée par l'usage de rouleaux souples.

La vue 1h, en coupe orthogonale, et la vue 1j, en plan, présentent l'amélioration, selon l'art antérieur, proposée par le document FR 2 267 961, substituant au rouleau flexible (4) précédemment décrit deux rouleaux flexibles (4) analogues, fixés à la charpente du convoyeur par les mêmes points de fixation extérieurs (5) et, légèrement imbriqués dans le sens du déplacement de la bande, par des points de fixation internes (6) qui sont fixés sur la charpente du convoyeur.

L'entraînement dans le sens de la marche, silhouetté par la vue 1j, donne une courbure dissymétrique aux deux rouleaux flexibles (4) dont l'effet global, indiqué par l'angle équivalent (a), est de même nature que le pincement positif présenté par des rouleaux rigides par la vue 1b, et agit donc dans le sens stabilisant. Le document cité revendique la possibilité de donner aux rouleaux flexibles (4) un pincement positif permanent, utile à vide, son accroissement en charge étant plutôt défavorable mais modulable, de façon unique, par l'effet plus ou moins important de l'entraînement dans le sens de la marche, suivant la valeur de l'imbrication.

La figure 1k représente une réalisation matérielle plus détaillée du schéma indiqué en vue 1h, qui présente l'inconvénient de nécessiter la réalisation d'un bâti spécial (7) pour supporter les points de fixation internes (6).

Les paliers à roulement (8), reliant lesdits points de fixation interne (6) à leur rouleau flexible (4) respectif, présentent un alignement, variable avec la charge, qui peut limiter leur tenue à la fatigue.

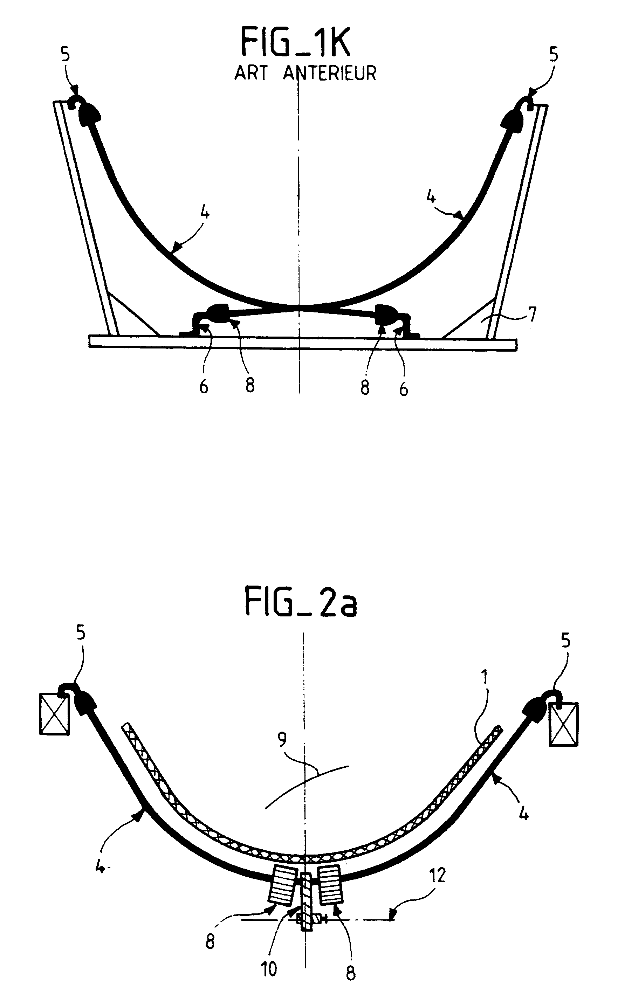

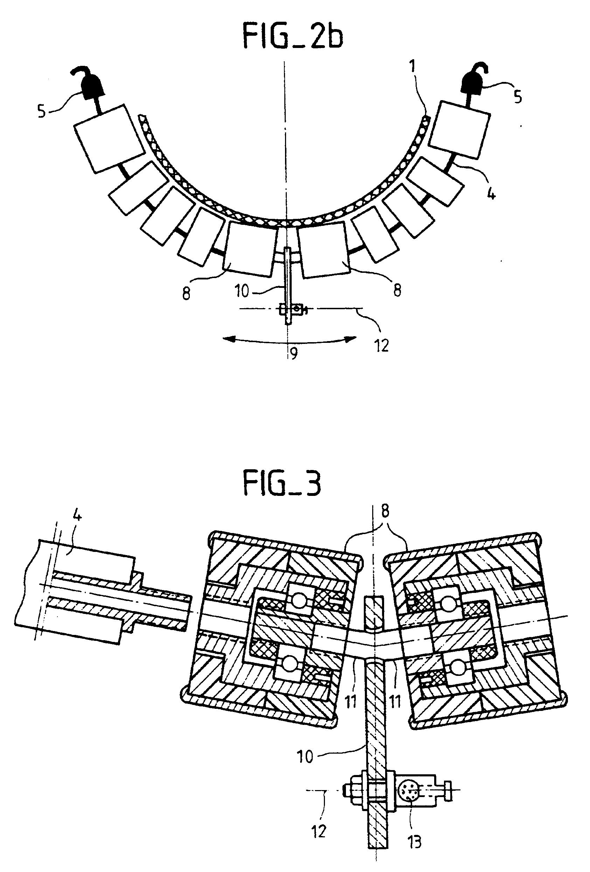

La figure 2 expose une réalisation selon l'invention, en schéma en vue 2a pour expliquer l'existence d'une fixation centrale (9) sur chaque couple de rouleaux flexibles.

La vue 2b présente la réalisation matérielle et la figure 3 détaille en coupe la fixation centrale (9) ; ces trois figures seront décrites simultanément.

La bande transporteuse (1) est creusée en forge d'auge progressive, du fait de sa suspension au chassis du convoyeur uniquement par les deux points de fixation extérieurs (5). Les deux rouleaux flexibles (4), situés dans un même plan, se comporteraient comme un rouleau unique, pendulaire, sans les propriétés de la fixation centrale (9) qui relie leurs paliers à roulement (8).

Ladite fixation centrale (9) est en effet formée d'un levier basculant (10), sur lequel sont fixés, avec un angle moyen approprié, les axes internes des roulements (11).
Ledit levier basculant (10) est libre de tourillonner, dans les variations d'altitude de l'équilibre, autour d'un axe fixe (12), du fait que celui-ci est attaché par un axe longitudinal (13), tige rigide ou câble attaché en deux points, préférentiellement à ses extrêmités, au chassis fixe du convoyeur. De ce seul fait, le pincement équivalent à celui de rouleaux rigides, du fait du basculement pendulaire de l'ensemble support flexible représenté par la figure 2, autour des deux points fixes de suspension au chassis du convoyeur constitués par les points de fixation extérieurs (5), est variable.

L'invention consiste à choisir les points fixes, la longueur des rouleaux flexibles (4) entre lesdits points fixes et la disposition du levier basculant (10), de façon que le pincement positif - volontairement établi maximum à vide et selon un réglage expérimental éventuellement différent entre les zones de points singuliers - soit réduit, par le passage de la charge, à une valeur optimale, éventuellement nulle à la charge maximale admise.

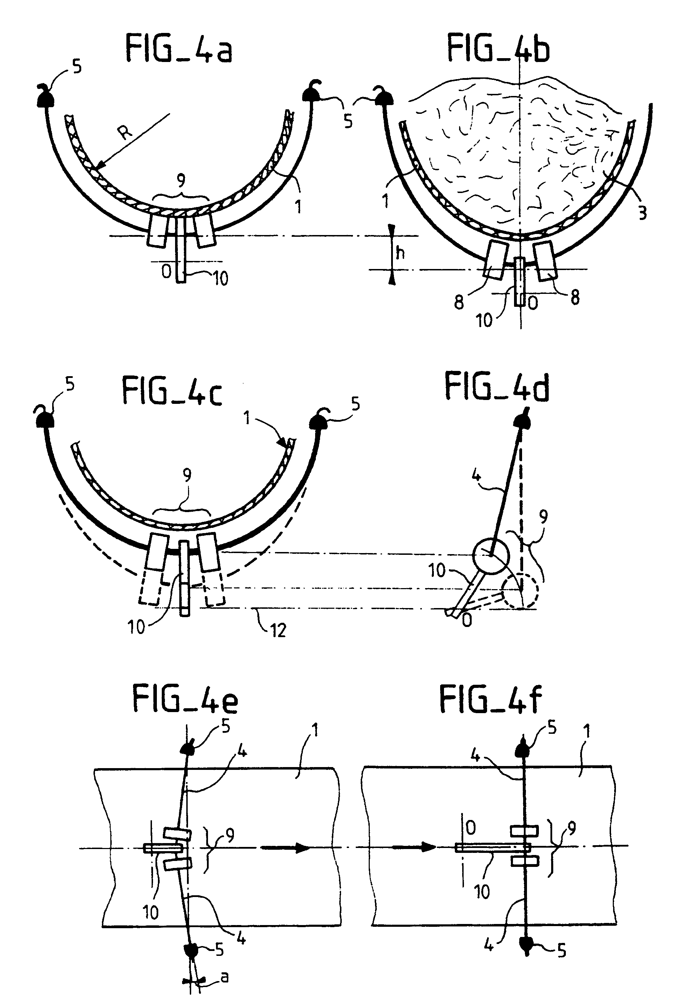

La figure 4 explique les variations de forme des supports souples selon les circonstances.

Les vues 4a et 4b conjuguées montrent schématiquement deux sections orthogonales à la bande, la vue 4a illustrant le fonctionnement à vide et la vue 4b lorsque la bande transporteuse (1) supporte la charge transportée (3) maximale. En vue 4a, la raideur propre de la bande transporteuse (1), aussi bien que sa suspension pendulaire par les rouleaux flexibles accrochés aux points de fixation extérieurs (5), fait prendre à l'ensemble sensiblement, la forme d'une demi-circonférence sous un rayon (R) approximativement constant.

L'effet de la charge transportée (3), représenté en vue 4b, abaisse généralement la fixation centrale (9) d'une différence d'altitude (h), croissante avec la charge, par répartition majoritairement vers le centre, qui fait prendre une forme caténaire, sensiblement parabolique, à l'ensemble souple constitué de la bande et des rouleaux.

Les vues 4c et 4d conjuguées, pour une valeur intermédiaire de la charge, exposent la trajectoire courbe imposée à la fixation centrale (9) par la rotation du levier basculant (10) qui la porte autour de l'axe fixe (12).

Le pincement équivalent variable qui s'en déduit est exposé par les vues de dessus 4e et 4f correspondant aux cas de charge extrêmes ; la vue 4e, correspondant à la section vue en 4a, où la bande est à vide ;
la vue 4f, correspondant à la section vue en 4b, où la charge est maximale et le pincement se réduit, de la valeur initiale (a) à une valeur presque nulle, diminuant ainsi les valeurs de frottement et, de ce fait les puissances absorbées.

En effet, le point fixe (0) sur la vue 4d, qui représente l'axe fixe (12) de la vue 4c, est attaché, longitudinalement par rapport aux points de fixation extérieurs (5) et les composantes de friction parasite, engendrées par les différences minimes de trajectoire en chaque point des rouleaux souples (4) portant la bande transporteuse (1) entraînent l'équilibre vers une disposition verticale où les frottements deviendront minimaux. Une particularité est, en outre, à mettre à l'actif de cette disposition, avantageusement par rapport aux remèdes proposés dans l'art antérieur, où un bâti spécial porte, de façon imbriquée, les points de fixation interne de deux rouleaux flexibles. Si le point fixe (0) est retenu au moyen d'un axe longitudinal, sans rigidité transversale, l'équilibrage caténaire du support souple selon l'invention est possible, même en cas de dissymétrie temporaire de la charge transportée, la fixation centrale (9) pouvant se débattre en direction transversale, attachée par un point fixe (0) sans rigidité, ou presque, de rappel vers le centre de la bande.

Il en résulte également une légère possibilité de débattement angulaire des axes internes des roulements, plus favorable à la tenue à la fatigue des paliers à roulement que lorsque ceux-ci sont fixés rigidement à un bâti spécial selon l'art antérieur.

Par ailleurs, le centrage dudit point fixe (0), et donc de toute la fixation centrale (9), se fait par équilibre naturel au montage, sans nécessiter de réglage des points de fixation internes qui sont portés par ladite fixation centrale (9) et non par un bâti spécial monté rigidement sur le chassis du transporteur.

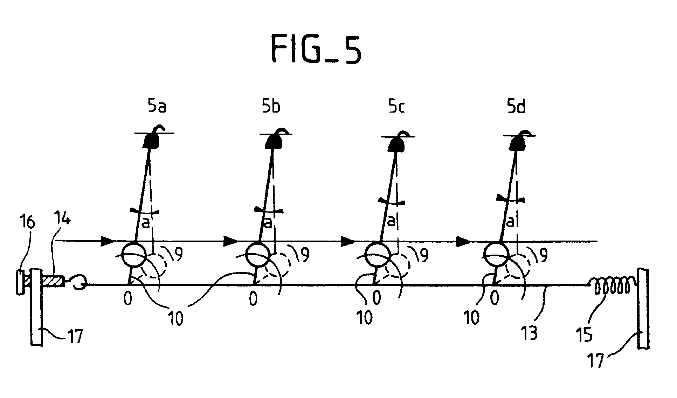

La figure 5 montre un schéma d'un dispositif d'ajustement possible, reliant les points fixes (O) de plusieurs supports souples selon l'invention, disposés au voisinage d'un point singulier du convoyeur.
De tels points singuliers sont constitués en particulier par les changements de pente du profil en long pour une bande transporteuse de géométrie complexe.
Les zones de concavité, centre en haut, sont constituées par quelques supports où la pente s'accroît en valeur absolue, qu'elle passe de descendante à une valeur nulle ou positive. Lorsque la tension de bande est accrue par un démarrage ou un début de chargement, la bande peu chargée a tendance à décoller des rouleaux qui la supportent et le pincement équivalent des rouleaux souples doit alors être maximal, mais se réduire lorsque la charge arrive en ce point, la bande en auge présentant deux rayons de courbure dans le même sens en chaque point, ce qui tend nettement plus le centre de la bande que ses bords.

Au contraire, les zones convexes, dites centre en bas, séparant une pente positive d'une pente longitudinale plus faible, nulle ou descendante, provoquant sur la bande des rayons de courbure opposés, l'ensemble de plusieurs supports rigides ou souples présente une surface d'ensemble en forme de diabolo, particulièrement stable pour la bande, dont les bords sont plus tendus que le centre.
Dans cette région le pincement équivalent doit être le plus faible aussi bien à vide qu'en charge.

Le dispositif présenté par le schéma de la figure 5 permet d'envisager, à la mise en service de l'installation et même pour corrections en service, un ajustage fin de la position des points fixes (0), ici représentés au nombre de quatre supports, selon l'invention.

Ces différents points fixes (0) sont reliés longitudinalement par un câble commun, jouant le rôle de l'axe longitudinal (13) tendu entre une vis de réglage (14) et un ressort de tension (15), tous deux rendus solidaires du chassis du convoyeur par un écrou ou filetage (16) et un point d'accrochage (17).
Etant écartés entre eux de plusieurs mètres, lesdits points fixes (0) ont une certaine latitude de centrage transversal sous l'effet de dissymétrie de la charge demandant un léger balancement latéral des fixations centrales (9).

Le câble commun formant axe longitudinal (13) passe par exemple par un trou situé sur chaque axe fixe (12) où une vis-pointeau permet, au montage, de régler les écartements des points fixes (0), par serrage dudit câble de quelques millimètres de diamètre. Les écarts transversaux des divers points fixes (0) exercent des rappels élastiques de faible intensité sur chaque levier basculant (10).

Par contre, la.trajectoire de rayon constant de chacun d'eux autour de chaque axe fixe, schématisé par le point (0), peut être ajustée avec précision, par rotation de la vis de réglage (14) dans l'écrou ou filetage (16), de façon à réduire le pincement lorsque la charge s'accroît. La correction de fluages ou de variations des tensions de la bande transporteuse avec la température est ainsi possible. Le dispositif, dont la fixation au chassis du convoyeur pour chaque support souple ne se fait donc que par les deux points de fixation extérieurs (5a) (5b) (5c) (5d) autorise donc encore une installation localement suspendue par des câbles suivant une disposition extrêmement légère, permettant de franchir de grandes portées sans points d'appuis intermédiaires, tout en conservant une stabilité de marche finement ajustable (il suffit que les leviers basculants (10) soient de longueur notable par rapport aux flèches prises par l'installation).
D'autres dispositions, standardisables, peuvent être adoptées sur de grandes parties rectilignes d'un convoyeur, par l'aménagement de longues tiges formant l'axe longitudinal (13) de réglage du pincement.
Un tel dispositif permet un ajustement expérimental des meilleures valeurs de pincement équivalent des rouleaux flexibles à vide et en charge en visant les plus faibles valeurs possibles de résistance au roulement de l'installation, donc de puissance absorbée.
L'homme de l'art peut bien entendu combiner les différents avantages apportés par l'invention à des secteurs divers d'un convoyeur, l'ajustement du pincement étant éventuellement automatisable en fonction de la mesure de l'énergie nécessaire à la translation.

## Revendications

1. Dispositif de centrage automatique de la bande (1), sur convoyeur à bande transporteuse souple, supportée par deux rangées de rouleaux flexibles (4) comportant une fixation centrale (9) unique et assurant un angle de pincement (a) positif ou nul qui rappelle la bande mise en forme d'auge vers un équilibre dynamique stable sur l'axe de transporteur,
caractérisé en ce que ladite fixation centrale (9) unique, située plus bas que les points de fixation extérieurs (5) et commune à chaque couple desdits rouleaux flexibles (4), est mobile et se voit imposer, lorsque son altitude varie avec la charge, une trajectoire courbe, s'étendant en direction de la trajectoire longitudinale de la bande, par la rotation autour d'un axe fixe (12) du levier basculant (10) qui porte ladite fixation centrale (9) unique et mobile, de façon à réduire l'angle de pincement (a) quand s'accroît la charge transportée (3),
et en ce que la trajectoire de ladite fixation centrale (9) tournant autour de l'axe fixe (12) est réglée de façon que ledit pincement (a) s'annule pour la valeur maximale de la charge transportée (3).

2. Dispositif de centrage automatique sur convoyeur à bande transporte souple selon la revendication 1, caractérisé en ce que les axes fixes (12) de plusieurs ensembles de supports souples sont reliés entre eux par un axe longitudinal (13), tendu entre une vis de réglage (14) et un ressort de tension (15), eux-mêmes rendus solidaires du chassis du convoyeur.

3. Dispositif de centrage automatique sur convoyeur à bande transporteuse souple selon la revendication 2, caractérisé en ce que la rotation de la vis de réglage (14) dans un écrou ou filetage (16), fixe par rapport au châssis du convoyeur, permet l'ajustement eu compromis optimal antre la stabilité à vide et en charge, induisant les plus faibles valeurs possibles de résistance au roulement et, de ce fait, de la puissance absorbée.

4. Dispositif de centrage automatique sur convoyeur à bande transporteuse souple selon la revendication 2, caractérisé en ce que l'axe longitudinal (13) est un câble fixe par vis-pointeau à chaque axe fixe (12) qu'il relie longitudinalement, permettant un débattement dans la direction transversale des fixations centrales (9) sous l'effet de la dissymétrie de la charge transportée (3).

## Claims

1. An automatic centring device for a belt (1), on a conveyor having a flexible belt, said belt (1) being supported by two rows of flexible rollers (4) having a central fastening (9) which is unique and provides a toe-in angle (a) either positive or equal to zero which recalls the belt shaped in the form of a trough towards a stable dynamic equilibrium on the axis of the conveyor,
characterized in that said central fastening (9), unique, located lower than the external fastening points (5) and common to each pair of said flexible rollers (4), can move and, when its altitude varies with the load, is given a curve trajectory extending in the longitudinal trajectory of the belt, by rotation around a fixed axis (12) of the toggle lever (10) which supports said central fastening (9), unique and which can move, in order to reduce the toe-in angle (a) when the carried load (3) increases.

2. Automatic centring device for a belt (1), on a conveyor having a flexible belt, according to claim 1, characterised on that the fixed axis (12) of several sets of flexible supports are connected to one another by a longitudinal axis (13), which is held taut between an adjustment screw (14) ad a tension spring (15), which are themselves linked to the frame of the conveyor.

3. Automatic centring device for a belt (1), on a conveyor having a flexible belt, according to claim 2, characterised in that the rotation of the adjustment screw (14) in a nut or a thread (16), which is stationary in relation to the flame of the conveyor, allows the adjustment to the optimal compromise between the stability of the belt when it is empty and loaded, resulting in the lowest possible values for resistance to rolling and, therefrom, of the lowest possible values for consumed energy.

4. Automatic centring device for a belt (1), on a conveyor having a flexible belt, according to claim 2, characterised in that the longitudinal axis (13) is a cable fixed by an adjusting screw to each fixed axis (12) which it connects longitudinally, thus allowing a deflection of the central fastenings (9) in the transverse direction, under the asymmetrical action of the carried load (3).

## Patentansprüche

1. Automatische Gurtzentriervorrichtung (1) für elastische Förderbänder, abgestützt durch zwei Reihen flexibler Rollen (4) mit einer einzigen, zentralen Halterung (9), die einen Verkantungswinkel (a) gewährleisten, der positiv oder gleich null ist und den gemuldeten Gurt zu einem stabilen dynamischen Gleichgewicht auf der Förderbandachse zurückführt, dadurch gekennzeichnet, daß die genannte einzige, zentrale Halterung (9), die tiefer liegt als die äußeren Halterungspunkte (5) und jeweils einem Paar der genannten flexiblen Rollen (4) gemeinsam ist, beweglich ist und, wenn sich ihre Höhe unter der Last verändert, eine bogenförmige Bewegung in Gurtlängsrichtung erfährt, indem eine Drehung des Kipphebels (10) um eine feststehende Achse (12) erfolgt, wobei der genannte Kipphebel (10) die genannte einzige, bewegliche, zentrale Halterung (9) trägt, so daß sich der Verkantungswinkel (a) verringert, wenn sich die beförderte Last (3) vergrößert, sowie dadurch, daß der Verlauf der genannten zentralen Halterung (9), die sich um die feste Achse (12) dreht, so geregelt wird, daß sich die genannte Verkantung (a) beim Höchstwert der beförderten Last (3) aufhebt.

2. Automatische Gurtzentriervorrichtung (1) für elastische Förderbänder nach Anspruch 1, dadurch gekennzeichnet, daß die feststehenden Achsen (12) mehrerer Reihen elastischer Tragrollen durch eine Längsachse (13) untereinander verbunden sind, die zwischen einer stellschraube (14) und einer Spannfeder (15) gespannt ist, die mit dem Förderbandgestell fest verbunden sind.

3. Automatische Gurtzentriervorrichtung (1) für elastische Förderbänder nach Anspruch 2, dadurch gekennzeichnet, daß die Drehung der Stellschraube (14) in einer Mutter bzw. einem Gewinde (16), die bzw. das mit dem Förderbandgestell fest verbunden ist, die optimale Einstellung zwischen der Stabilität im unbelasteten bzw. im belasteten Zustand erlaubt, wobei die kleinstmöglichen Werte des Laufwiderstands bzw. der absorbierten Kraft bewirkt werden.

4. Automatische Gurtzentriervorrichtung (1) für elastische Förderbänder nach Anspruch 2, dadurch gekennzeichnet, daß die Längsachse (13) ein Seil ist, das mit Stellschrauben an den einzelnen feststehenden Achsen (12) befestigt ist, die es in Längsrichtung verbindet, was aufgrund einer Schiefe der geförderten Last (3) einen Ausschlag der zentralen Halterungen (9) in Querrichtung erlaubt.
